Europäisches Patentamt

European Patent Office

Office européen des brevets

(11) Publication number: **0 220 728**
**A2**

# (12) EUROPEAN PATENT APPLICATION

(21) Application number: 86115037.3

(22) Date of filing: 29.10.86

(51) Int. Cl.⁴: **B32B 31/20** , B32B 31/10

(30) Priority: 30.10.85 IT 2265785

(43) Date of publication of application:
06.05.87 Bulletin 87/19

(84) Designated Contracting States:
AT BE CH DE ES FR GB GR LI LU NL SE

(71) Applicant: **MAZZUCCHELLI CELLULOIDE
S.P.A.
Via S.e P. Mazzucchelli, 7
I-21043 Castiglione Olona(IT)**

(72) Inventor: **Orsi, Marco
Via Petrarca, 20
I-21100 Varese(IT)**

(74) Representative: **Vatti, Paolo, Dr. Ing. et al
Fumero - Studio Consulenza Brevetti
Widenmayerstrasse 4/I
D-8000 München 22(DE)**

(54) **Machine for the production of jackets for floppy discs.**

(57) A machine for the production of jackets for floppy discs used as data logging supports, apt to guarantee a high productivity with a full reliability and a top quality product, comprises a feeding unit, consisting of a feeder for a stack of polyvinyl chloride (PVC) sheets, having a conveyor belt feedboard, and of a support for four rolls of liner, and a working unit being fed with said sheets and said liners, the working unit comprising a heated welding cylinder cooperating with a back pressure cylinder, to which are simultaneously fed said sheets and said liners to be welded together at predetermined spots, and a pair of die-cutting cylinders, downstream of said welding cylinders, to die-cut four jackets for each PVC sheet being fed.

FIG.1

### "MACHINE FOR THE PRODUCTION OF JACKETS FOR FLOPPY DISCS"

The present invention proposes to solve, in the most efficient manner, the problems connected with the production of jackets for floppy discs, used as data logging supports in a lot of electronic data processing machines.

The present invention concerns the production of these jackets, starting from flat sheets of polyvinyl chloride (PVC), and its object is to supply perfectly flat highquality die-cut jackets at high production rhythms and with a guarantee of full reliability.

At present, the only way to produce jackets for floppy discs, starting from flat PVC sheets, is to use a set of small machines, whereon successive operations are carried out with the help of several operators. This system involves high costs, reduced productivity, and scarce uniformity and reliability in the production. Also single machines have been conceived for the production of such jackets, but they all work starting from rolls, instead of flat PVC sheets, whereby the quality of the finished product is never satisfactory, due to the tendency of PVC to recover its original rolled shape.

The present invention proposes to improve said production system by providing a single machine allowing to totally avoid the aforecited drawbacks.

Said machine is characterized in that it comprises a feeding unit, consisting of a feeder for a stack of polyvinyl chloride (PVC) sheets, having a conveyor belt feedboard, and of a support for four rolls of liner, and a working unit being fed with said sheets and said liners, the working unit comprising a heated welding cylinder cooperating with a back pressure cylinder, to which are simultaneously fed said sheets and said liners to be welded together at predetermined spots, and a pair of die-cutting cylinders, downstream of said welding cylinders, to die-cut four jackets for each PVC sheet being fed.

In said machine, the PVC sheets are suitably fed to the welding cylinders by said conveyor belt feedboard, through pneumatic belts, after front and lateral adjustment by means of adjusters, while the liners are fed to said welding cylinders through roller conveyors and through a welding board, after having been cut into sheets -downstream of said board -by a pair of knife drums. Furthermore, in said machine, the heated welding cylinder has part of its surface covered by shells provided with welding tips distributed in a pattern and it is heated by inner heating resistors positioned along its generating lines.

The invention is now described in further detail, by mere way of example, with reference to the accompanying drawings, in which:

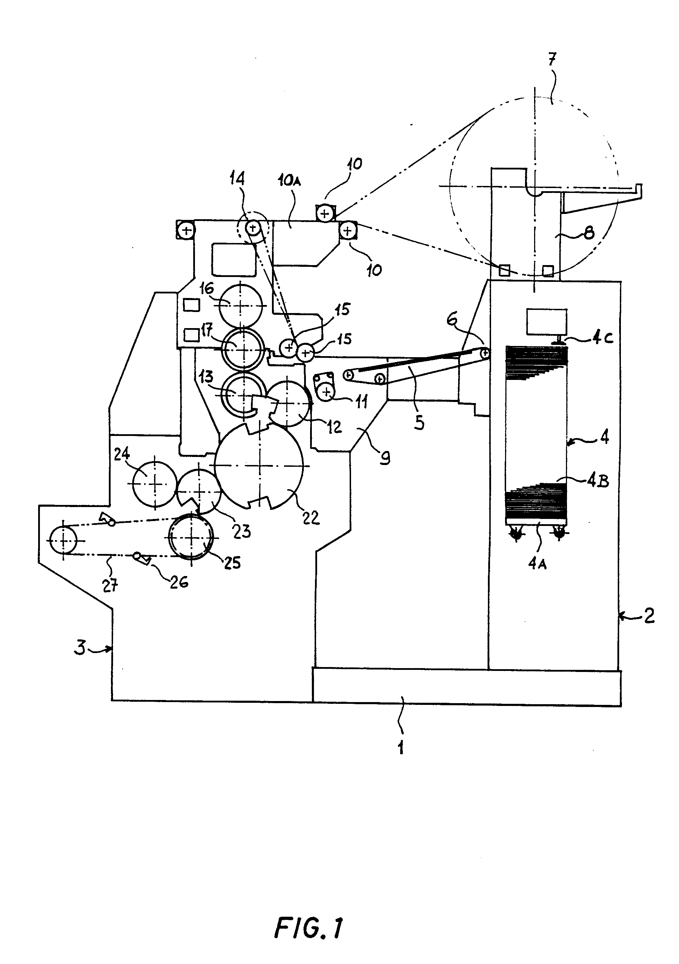

Fig. 1 is a diagrammatic representation of a preferred embodiment of the machine according to the invention;

Fig. 2 is an enlarged-scale perspective view, showing a detail of the welding cylinder of the same machine, of which

Fig. 3 is a cross-section view.

As shown in the drawings, this machine comprises, onto a same bed 1, a feeding unit 2 and a working unit 3.

The feeding unit 2 consists of a feeder 4 - comprising a table 4A, carrying a stack 4B of PVC sheets at the centre of the unit 2 and sucker means 4C to draw and shift said sheets, and a feedboard 5 provided with conveyor belts 6 -and of a support for four side-byside rolls 7 of liner (non-woven fabric), formed by shoulders 8 at the top of the unit 2, the unwinding of said rolls being controlled by an adjustable brake to keep the liner stretched to the desired extent.

The PVC sheets reach the working unit 3 in correspondence of front and lateral adjusters positioned at the end of the feedboard 5, which adjust the position of said sheets. The four rolls of liner reach in turn the working unit 3 in correspondence of roller conveyors 10, from which they slide onto a welding board 10A which, when replacing the rolls, is used to carry out the bonding with the liners of the new rolls.

In the working unit 3, the PVC sheets -once adjusted on the feedboard 5 -are fed by pneumatic belts 11 to a cylinder 12, having grippers, and are then inserted between said cylinder 12 and a heated welding cylinder 13, in respect of which the cylinder 12 acts as a back pressure cylinder.

The liners in turn reach the heated cylinder 13 after having wound onto an unwinding roller 14 and onto a pair of guide rollers 15 and after having been cut into sheets, similar to the PVC sheets, between a knife drum 16 and a counter-knife drum 17.

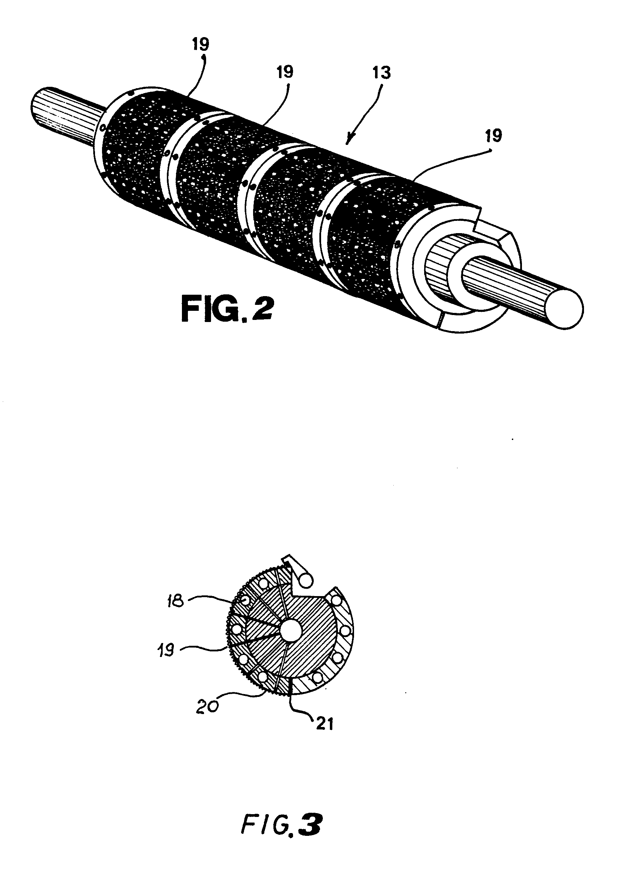

The welding cylinder 13 (figures 2 and 3) is heated with heating resistors 18 positioned along its generating lines. Part of its surface is covered by four shells 19 provided with welding tips 20, distributed in a pattern, and with suction holes 21 apt to "retain" the liners.

A probe (not shown) is apt to take, display and regulate the temperature of the cylinder 13. The PVC sheets fed from the feeder 4 and the liner sheets cut from the rolls 7 are conveyed between said cylinder 13 and the back pressure cylinder 12 and are then welded together by the tips 20 of the cylinder 13, between this latter and the cylinder 12.

The cylinders 12 and 13 are followed, in the machine, by a roller conveyor 22, which conveys the welded sheets to the die-cutting cylinders 23 and 24: of these, the first one is a counter-die-cutting cylinder equipped with carrying grippers, while the second is a die-cutting cylinder on which are formed the four pattern profiles desired for the jackets being produced.

Once the die-cutting has been carried out, the cut parts are expelled and, through a box, they are drawn and sucked by a hose fan, while the four die-cut jackets are conveyed, through the outlet 25, to stackers (not shown) by means of grippers 26 mounted on chains 27.

The heretofore described machine allows to obtain, for each PVC sheet introduced therein, four perfectly flat and faultless jackets. Production is carried out at high rythms and with great reliability, while a single operator attends to the machine (or even to a set of machines); a high productivity is thereby obtained and, in any case, far higher than that which can be obtained with the present systems of known technique, for high-quality products.

It is understood that the invention can be carried out with variants and modifications in respect of the heretofore described and illustrated embodiment thereof, without thereby departing from the scope of the invention itself.

## Claims

1) Machine for the production of jackets for floppy discs used as data logging supports, apt to guarantee a high productivity with a full reliability and a top quality product, characterized in that it comprises a feeding unit, consisting of a feeder for a stack of polyvinyl chloride (PVC) sheets, having a conveyor belt feedboard, and of a support for four rolls of liner, and a working unit being fed with said sheets and said liners, the working unit comprising a heated welding cylinder cooperating with a back pressure cylinder, to which are simultaneously fed said sheets and said liners to be welded together at predetermined spots, and a pair of die-cutting cylinders, downstream of said welding cylinders, to die-cut four jackets for each PVC sheet being fed.

2) Machine as in claim 1), wherein the PVC sheets are fed to the welding cylinders by said conveyor belt feedboard, through pneumatic belts, after front and lateral adjustment by means of adjusters.

3) Machine as in claim 1), wherein the liners are fed to said welding cylinders through roller conveyors and through a welding board, after having been cut into sheets -downstream of said board -by a pair of knife drums.

4) Machine as in claim 1), wherein the heated welding cylinder has part of its surface covered by shells provided with welding tips distributed in a pattern and it is heated by inner heating resistors positioned along its generating lines.

5) Machine as in claim 4), wherein the die-cutting cylinders comprise a die-cutting cylinder, having four pattern profiles, and a counter-die-cutting cylinder equipped with carrying grippers.

6) Machine as in claim 1), wherein also the back pressure cylinder comprises carrying grippers for the sheets.

7) Machine as in claim 1), wherein the die-cut jackets are conveyed to suitable stackers, by means of grippers mounted on chains, through the outlet of the machine.

FIG.1

FIG.2

FIG.3